# EUROPÄISCHE PATENTANMELDUNG

(11) **EP 2 733 054 A2**
(43) Veröffentlichungstag der Anmeldung: **21.05.2014**
(21) Anmeldenummer: 13189626.8
(22) Anmeldetag: 22.10.2013
(51) Int. Cl.: B62D 35/00

(54) **Vorrichtung zur Verlagerung eines Gegenstands und Kraftfahrzeug mit einer derartigen Vorrichtung**

(30) Priorität: 19.11.2012 DE 102012221023
(71) Anmelder: SUSPA GmbH, 90518 Altdorf (DE)
(72) Erfinder: Preis, Johannes, 93077 Bad Abbach/Lengfeld (DE); Römer, Michael, 90518 Altdorf (DE)
(74) Vertreter: Rau, Schneck & Hübner Patentanwälte Rechtsanwälte PartGmbB

(57) **Zusammenfassung**

Eine Vorrichtung zur Verlagerung eines Gegenstands umfasst ein Antriebselement (5) zum Erzeugen einer Antriebsdrehbewegung, ein Übertragungselement (12) zum Übertragen der Antriebsdrehbewegung, mindestens ein mit dem Übertragungselement (12) verbundenes Kinematikelement (4) zum Wandeln der Antriebsdrehbewegung in eine zumindest abschnittweise translatorische Verlagerungsbewegung und ein Rastsperrenelement (8; 8a; 8b) zum rastenden Sichern des Gegenstands in einer Position.

## Beschreibung

Die Erfindung betrifft eine Vorrichtung zur Verlagerung eines Gegenstands, insbesondere eines Luftleitelements, sowie ein Kraftfahrzeug mit einer derartigen Vorrichtung.

Aus dem Stand der Technik ist ein elektromechanisches Spoilerverstellsystem bekannt, bei dem ein Spoilerelement zwischen einer eingefahrenen Position und einer maximal ausgefahrenen Position gegenüber einem Rahmen eines Kraftfahrzeugs verlagert werden kann. In beiden Endpositionen ist das Spoilerelement, insbesondere mechanisch, gesperrt. Ein derartiges Spoilerverstellsystem ermöglicht nicht die Anordnung des Spoilerelements in einer Zwischenposition.

Aus der WO 2007/095886 A1 ist eine Luftleiteinrichtung für ein Fahrzeug bekannt. Mittels eines Stellantriebs kann ein Spoilerelement an einem Kraftfahrzeug verstellt werden. Dazu wird ein selbsthemmender Spindelantrieb verwendet, der mittels einer flexiblen Welle antreibbar sind. Ein derartiges Antriebssystem erfordert hohe Drehzahlen bei dem Antrieb der flexiblen Welle und der Gewindespindel. Ein derartiges System verursacht hohe Geräuschemission.

Aus der DE 10 2008 029 884 B4 ist ein System für die Festlegung einer Zwischenstellung eines beweglichen Spoilers für ein Kraftfahrzeug bekannt. Dabei kann ein Spoilerelement in eine vorbestimmte Zwischenposition gebracht und in dieser vorbestimmten Position mittels einer Sperrklinke verriegelt werden. Eine gesicherte, d. h. gesperrte Anordnung in einer von der vorbestimmten Position abweichenden Position ist nicht möglich.

Der Erfindung liegt die Aufgabe zugrunde, eine Vorrichtung zur Verlagerung eines Gegenstands derart zu verbessern, dass der Gegenstand stufenlos positioniert werden kann, wobei in jeder Position, die stufenlos realisierbar ist, der Gegenstand zuverlässig, ohne eine weitere, unbeabsichtigte Verlagerung, angeordnet ist.

Die Aufgabe wird durch die Merkmale des Anspruchs 1 gelöst. Der Kern der Erfindung besteht darin, ein Rastsperrenelement vorzusehen, das ein rastendes Sichern eines verlagerten Gegenstands in einer, insbesondere stufenlos anfahrbaren, Position gewährleistet. Der zu verlagernde Gegenstand kann an mindestens einem Kinematikelement angebracht sein. Das mindestens eine Kinematikelement dient zum Wandeln einer Antriebsdrehbewegung in eine zumindest abschnittsweise translatorische Verlagerungsbewegung zum Verlagern des Gegenstands. Die Antriebsdrehbewegung wird von einem Antriebselement, insbesondere einem Elektromotor, erzeugt und mittels eines Übertragungselements an das mindestens eine Kinematikelement übertragen. Das Rastsperrenelement ermöglicht ein stufenloses rastendes Sichern der Position des Gegenstands. Es ist insbesondere möglich, eine Verlagerung des Gegenstands in einer beliebigen Zwischenposition zu stoppen und den Gegenstand in dieser beliebigen Zwischenposition dauerhaft anzuordnen. Eine dauerhafte Anordnung ist insbesondere dadurch möglich, da das Rastsperrenelement eine momentensteife Positionierung des Gegenstands ermöglicht. Insbesondere dadurch, dass lediglich eine geringe Anzahl von Elementen für die stufenlose Positionierung des Gegenstands zusammenwirken, weist die erfindungsgemäße Vorrichtung insgesamt eine hohe Steifigkeit auf. Eine Gesamtelastizität der Vorrichtung ist reduziert. Insbesondere ist es möglich, flexible Wellen und/oder Spindeltriebe für die Verlagerung des Gegenstands zu vermeiden.

Die Vorrichtung ermöglicht insbesondere eine geräuscharme Verlagerung des Gegenstands. Die verwendeten Elemente sind unkompliziert aufgebaut und betreffen zumindest teilweise Standardelemente, die kostengünstig auf dem Markt zur Verfügung stehen. Die Vorrichtung insgesamt ist kostengünstig realisierbar.

Eine Vorrichtung nach Anspruch 2 ermöglicht eine verbesserte, insbesondere stabilere, Verlagerung des Gegenstands. Insbesondere ist eine Kraftübertragung von dem Übertragungselement auf den Gegenstand verbessert.

Eine Vorrichtung nach Anspruch 3 ist vorteilhaft auf einem Trägerelement angeordnet. Die Vorrichtung ist als kompakte, einheitliche Baugruppe zusammengefasst und kann beispielsweise unkompliziert und schnell an einem Kraftfahrzeug eingebaut und wieder ausgebaut werden. Die Montage und Demontage der Vorrichtung sind vereinfacht. Insbesondere für Wartungs- und Reparaturzwecke ist die Vorrichtung verbessert.

Eine Vorrichtung nach Anspruch 4 ermöglicht eine verbesserte Kraftübertragung von dem Antriebselement auf den zu verlagernden Gegenstand.

Eine Vorrichtung nach Anspruch 5 ermöglicht eine effektive Sicherung einer unbeabsichtigten Verlagerung des Gegenstands.

Eine Vorrichtung nach Anspruch 6 kann insbesondere platzsparend und insbesondere gewichtsreduziert ausgeführt sein. Es ist möglich, das Rastsperrenelement insbesondere innerhalb eines Gehäuses einer Antriebseinheit anzuordnen. Dadurch ist das Rastsperrenelement zusätzlich, insbesondere vor äußeren Umgebungseinflüssen wie Nässe, Wärme und/oder Kälte sowie Verunreinigungen geschützt.

Eine Vorrichtung nach Anspruch 7 ermöglicht eine entkoppelte Anordnung von Rastsperrenelement und Übertragungselement. Insbesondere ist es möglich, das Rastsperrenelement gemeinsam mit dem Antriebselement parallel beabstandet zu dem Übertragungselement anzuordnen. Dadurch ist es möglich, eine Einbaugröße der Vorrichtung insbesondere entlang einer Längsachse des Übertragungselements, zu reduzieren.

Eine Vorrichtung nach Anspruch 8 oder 9 ermöglicht eine besonders vorteilhafte und unkomplizierte Kopplung von Rastsperrenelement und Übertragungselement.

Eine Vorrichtung nach Anspruch 10 ermöglicht eine direkte Sicherung einer stufenlos angefahrenen Position im Bereich des mindestens einen Kinematikelements. Insbesondere ist das Rastsperrenelement benachbart zu dem Kinematikelement angeordnet. Dadurch kann das Übertragungselement entlastet werden. Insbesondere ist dadurch vermieden, dass eine unbeabsichtigte Verlagerung des Gegenstands zu einem Tordieren des Übertragungselements führt. Das Übertragungselement ist mechanisch entlastet. Insbesondere weist eine derartige Vorrichtung zwei Rastsperrenelemente auf.

Eine Vorrichtung nach Anspruch 11 oder 12 ermöglicht eine unkomplizierte und effektive stufenlose Positionierung. Ein Rastsperrenelement, das ein Schlingfederelement oder mindestens eine Klemmrolle aufweist, ermöglicht ein zuverlässiges und effektives Sperren in jeder beliebigen Zwischenposition entlang einer Verlagerungsbewegung.

Eine Vorrichtung nach Anspruch 13 ermöglicht eine Verlagerung eines Gegenstands und Positionierung desselben gegenüber einem Kraftfahrzeug.

Eine Vorrichtung nach Anspruch 14 ermöglicht eine verbesserte Luftleitführung an einem Kraftfahrzeug, wobei eine Verlagerung des Gegenstands in Abhängigkeit aktueller Luftströmungsverhältnisse geregelt erfolgen kann. Ein derartiger Gegenstand ist ein Spoilerelement und insbesondere ein Heckspoiler an einem Kraftfahrzeug.

Ein Kraftfahrzeug nach Anspruch 15 weist die gleichen Vorteile auf wie eine vorstehend beschriebene Vorrichtung, auf deren Vorteile hiermit verwiesen wird.

Weitere vorteilhafte Ausgestaltungen der Erfindung, zusätzliche Merkmale und Einzelheiten ergeben sich aus der nachfolgenden Beschreibung von drei Ausführungsbeispielen anhand der Zeichnung. Es zeigen:
- Fig. 1: eine perspektivische Ansicht von oben einer erfindungsgemäßen Vorrichtung gemäß einem ersten Ausführungsbeispiel,
- Fig. 2: eine vergrößerte Schnittdarstellung einer Antriebseinheit mit einem Antriebselement und einem Rastsperrenelement gemäß Fig. 1,
- Fig. 3: eine Explosionsdarstellung eines Rastsperrenelements gemäß Fig. 2,
- Fig. 4: einen Querschnitt gemäß der Schnittlinie IV-IV in Fig. 1 bei einer Drehrichtung des Antriebselements im Uhrzeigersinn,
- Fig. 5: einen Querschnitt gemäß der Schnittlinie V-V in Fig. 1 bei einer Drehung des Antriebselements im Gegenuhrzeigersinn,
- Fig. 6: einen Querschnitt gemäß der Schnittlinie IV-IV in Fig. 1 bei einer Drehung einer Abtriebsseite des Rastsperrenelements im Gegenuhrzeigersinn,
- Fig. 7: einen Querschnitt gemäß Schnittlinie V-V in Fig. 1 bei einer Drehung der Abtriebsseite des Rastsperrenelements im Uhrzeigersinn,
- Fig. 8: eine Fig. 2 entsprechende Darstellung einer Antriebseinheit mit einer Stirnradstufe als Kinematikeinheit,
- Fig. 9: eine perspektivische Darstellung von unten einer erfindungsgemäßen Vorrichtung gemäß einem zweiten Ausführungsbeispiel,
- Fig. 10: eine perspektivische Explosionsdarstellung eines Rastsperrenelements mit Klemmrollen,
- Fig. 11: einen Querschnitt gemäß der Schnittlinie XI-XI in Fig. 9 in einer drehmomentübertragenden Anordnung,
- Fig. 12: einen Fig. 11 entsprechenden Querschnitt in einer sperrenden Anordnung des Rastsperrenelements,
- Fig. 13: eine Draufsicht einer erfindungsgemäßen Vorrichtung gemäß einem dritten Ausführungsbeispiel.

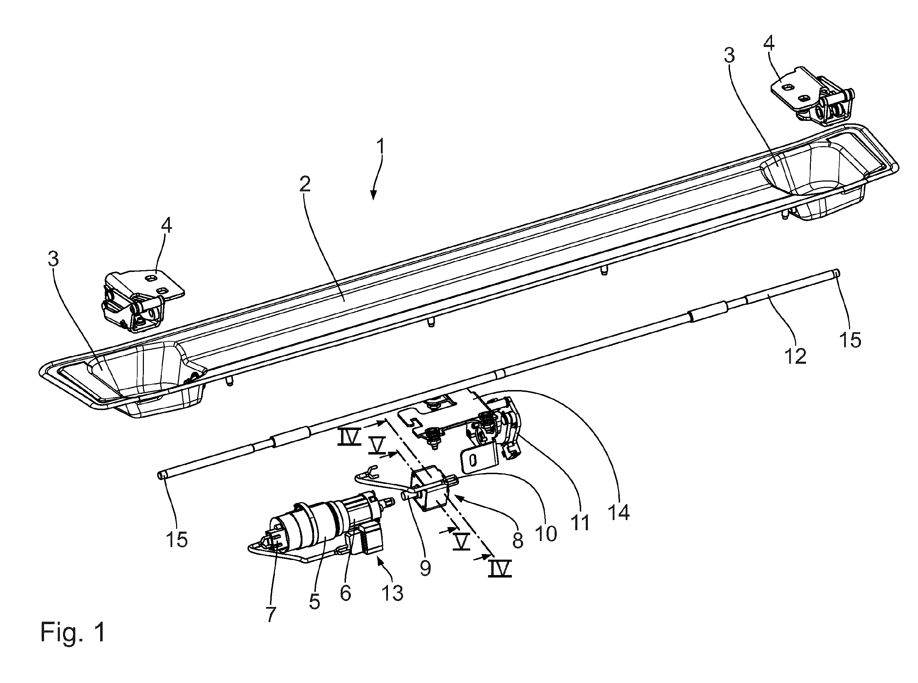

Eine in Fig. 1 als Ganzes mit 1 bezeichnete Vorrichtung dient zum Verlagern eines nicht dargestellten Gegenstands. Der Gegenstand ist insbesondere ein Luftleitelement in Form eines Spoilers, insbesondere eines Heckspoilers, für ein Kraftfahrzeug. Die Vorrichtung 1 umfasst ein längliches, im Wesentlichen rechteckförmiges Trägerelement 2, das die Vorrichtung 1 insgesamt trägt. Die Grundform des Trägerelements 2 entspricht einem langgestreckten Rechteck und ist der Form des Gegenstands angepasst. Im Bereich der kurzen Kanten der rechteckförmigen Umrandung ist jeweils eine sich quer zur Rechteckfläche erstreckende Vertiefung 3 vorgesehen.

Fig. 1 zeigt das Trägerelement 2 perspektivisch von oben. An der in Fig. 1 gezeigten Oberseite des Trägerelements 2 wird der Gegenstand befestigt. Dazu werden in den Vertiefungen 3 jeweils ein Kinematikelement 4 angeordnet. Die Kinematikelemente 4 dienen zur Verbindung mit dem zu verlagernden Gegenstand und sind scharnierartig ausgeführt. Die Kinematikelemente sind dazu vorgesehen, eine Antriebsdrehbewegung in eine Verlagerungsbewegung für den Gegenstand umzuwandeln. Die Verlagerungsbewegung ist zumindest abschnittsweise translatorisch ausgeführt. Insbesondere folgt die Verlagerungsbewegung einer Geraden, einer Bogenform und/oder einer Kreisbogenform. An einer Unterseite des Trägerelements 2 ist ein Antriebselement 5 in Form eines Elektromotors vorgesehen. Mit dem Antriebselement 5 ist ein Planetengetriebe 6 verbunden, um die Antriebsdrehbewegung des Antriebselements 5 zu untersetzen. An dem Antriebselement 5 ist weiterhin ein Encoderelement 7 vorgesehen, um eine aktuelle Motordrehzahl und/oder Drehposition des Elektromotors zu erfassen. Dadurch ist es möglich, eine aktuelle Verlagerungsposition des Gegenstands zu erfassen und beispielsweise an eine mit dem Encoderelement 7 verbundene Steuerung zu übermitteln. Eine derartige Steuerung kann ein Regelungselement aufweisen oder mit einer Regelungseinheit in Signalverbindung stehen, um beispielsweise die aktuelle Verlagerungsposition des Gegenstands in Abhängigkeit einer Geschwindigkeit des Kraftfahrzeugs und/oder in Abhängigkeit einer aktuellen Luftströmungssituation geregelt anzupassen, um ein aerodynamisches Verhalten des Kraftfahrzeugs insgesamt zu verbessern.

An dem Getriebe 6 kann ein Rastsperrenelement 8 angeordnet werden. Das Rastsperrenelement 8 wird später im Einzelnen noch erläutert. Das Rastsperrenelement 8 ist an einem Rastsperrenelement-Antrieb 9 mit dem Getriebe 6 und an einem Rastsperrenelement-Abtrieb 10 mit einer scharnierartigen Mittelkinematik 11 als Kinematikeinheit verbunden. Die Mittelkinematik 11 dient zur Übertragung der Antriebsdrehbewegung des Antriebselements 5 auf ein stangenförmiges Übertragungselement 12. Das Übertragungselement 12 ist beabstandet parallel zu einer Antriebswelle des Antriebselements 5 angeordnet.

Das Antriebselement 5 mit dem daran vorgesehenen Encoderelement 7, das Getriebe 6 und das Rastsperrenelement 8 bilden eine Antriebseinheit 13. Die Antriebseinheit 13 ist mittels eines Halteblechs 14 an dem Trägerelement 2 sicher befestigt. Das Halteblech 14 kann mit der Mittelkinematik 11 verbunden sein. Durch das Halteblech 14 ist die Antriebseinheit 13 sicher und definiert an dem Trägerelement 2 gehalten.

Mittels der Mittelkinematik 11 ist die Antriebseinheit 13 in einem zwischen den beiden freien, gegenüberliegend angeordneten Enden 15 des Antriebselements 11 mittigen Bereich des Antriebselements 12 angeordnet. An den Enden 15 ist das Antriebselement 12 mit jeweils einem der Kinematikelemente 4 verbunden. Dazu weisen die Vertiefungen 3 in einer im Wesentlichen vertikalen Stegwand eine Öffnung zum Durchführen des Antriebselements 12 auf.

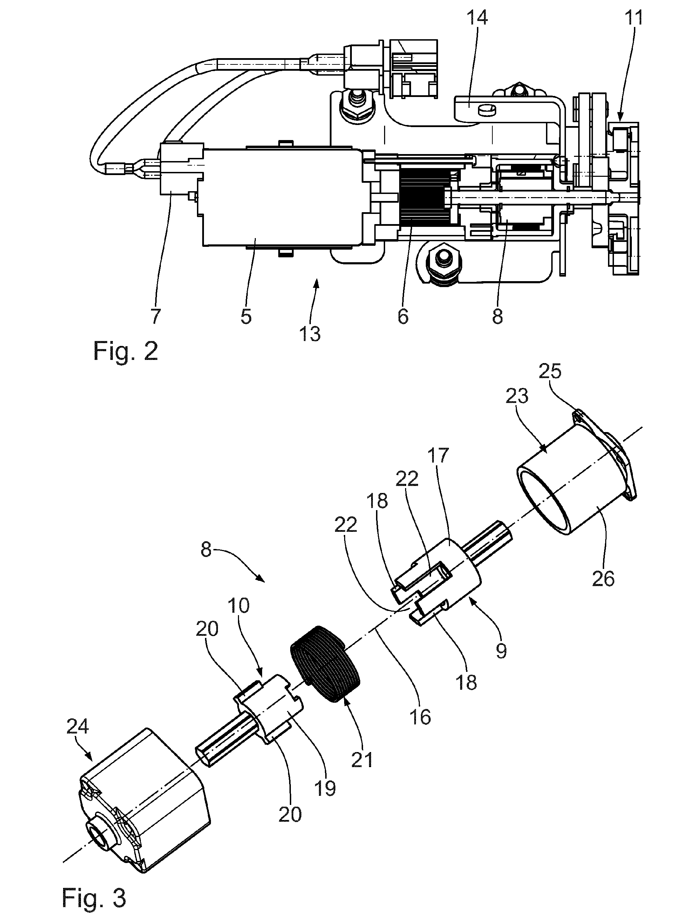

Die Antriebseinheit 13 ist separat in Fig. 2 dargestellt mit dem Antriebselement 5, dem Encoderelement 7, dem als Planetengetriebe ausgeführten Getriebe 6 und dem Rastsperrenelement 8. In Fig. 2 rechts ist die Mittelkinematik 11 dargestellt.

Fig. 3 zeigt eine vergrößerte Explosionsdarstellung des Rastsperrenelements 8. Das Rastsperrenelement 8 umfasst den Rastsperrenelement-Antrieb 9 und den Rastsperrenelement-Abtrieb 10. Der Rastsperrenelement-Antrieb 9 und der Rastsperrenelement-Abtrieb 10 sind bezüglich einer Drehung um eine Antriebsdrehachse 16 drehfest miteinander verbunden. Dazu weist der Rastsperrenelement-Antrieb 9 einen Hülsenabschnitt 17 mit sich parallel zur Antriebsdrehachse 16 erstreckenden Längsschlitzen 18 auf, die in einer äußeren Zylinderwand des Hülsenabschnitts 17 angeordnet sind.

Der Rastsperrenelement-Abtrieb 10 weist einen Hülsenabschnitt 19 auf, der einen Außendurchmesser derart aufweist, dass der Hülsenabschnitt 19 des Rastsperrenelement-Abtriebs 10 in dem Hülsenabschnitt 17 des Rastsperrenelement-Antriebs 9 zumindest abschnittsweise entlang der Antriebsdrehachse 16 anordenbar ist. Für eine drehfeste Verbindung bezüglich der Antriebsdrehachse 16 weist der Hülsenabschnitt 19 radial bezüglich der Antriebsdrehachse 16 nach außen gerichtete und an einer äußeren Zylindermantelfläche des Hülsenabschnitts 19 diametral gegenüberliegend angeordnete Längsstege 20 auf. Die Längsstege 20 können jeweils in einem korrespondierenden Längsschlitz 18 angeordnet sein, so dass der Rastsperrenelement-Antrieb 9 und der Rastsperrenelement-Abtrieb 10 drehfest miteinander verbunden sind.

Im Bereich der Hülsenabschnitte 17, 19 ist ein Schlingfederelement 21 vorgesehen. Das Schlingfederelement 21 ist in Fig. 3 in einem entspannten Zustand, also ohne äußere Kraftbeanspruchung, dargestellt. Die Schlingfeder ist als Schraubenfeder ausgeführt, wobei die beiden Enden des Schlingfederelements 21 um etwa 90° gebogen und bezüglich einer von dem Schlingfederelement 21 gebildeten Zylinderfläche radial nach innen, d. h. der Antriebsdrehachse 16 zugewandt sind. Die nach innen gebogenen Enden des Schlingfederelements 21 bilden Eingreifmittel 42 und dienen zum Eingreifen in Eingreifschlitze 22 an dem Hülsenabschnitt 17 des Rastsperrenelement-Antriebs 9.

Die Bewegungskomponenten des Rastsperrenelements 8, also der Rastsperrenelement-Antrieb 9, der Rastsperrenelement-Abtrieb 10 und das koaxial zu den beiden Komponenten 9, 10 angeordnete Schlingfederelement 21, sind in einem Rastsperrenelement-Gehäuse 24 angeordnet, das mittels einer Deckeltrommel 23 verschlossen werden kann. Die Deckeltrommel 23 weist einen im Wesentlichen flächigen, rechteckförmigen Deckel 25 auf, der zum Verschließen einer Öffnung des Rastsperrenelement-Gehäuses 24 dient. An dem Deckel 25 sind vier Bohrungen vorgesehen, so dass der Deckel 25 an dem Rastsperrenelement-Gehäuse 24 angeschraubt werden kann. Insbesondere einstückig ist an dem Deckel 25 ein Zylinderabschnitt 26 angeformt. Der Zylinderabschnitt 26 der Deckeltrommel 23 dient als Bremselement. Die Funktion der Deckeltrommel 23 wird im Folgenden näher erläutert.

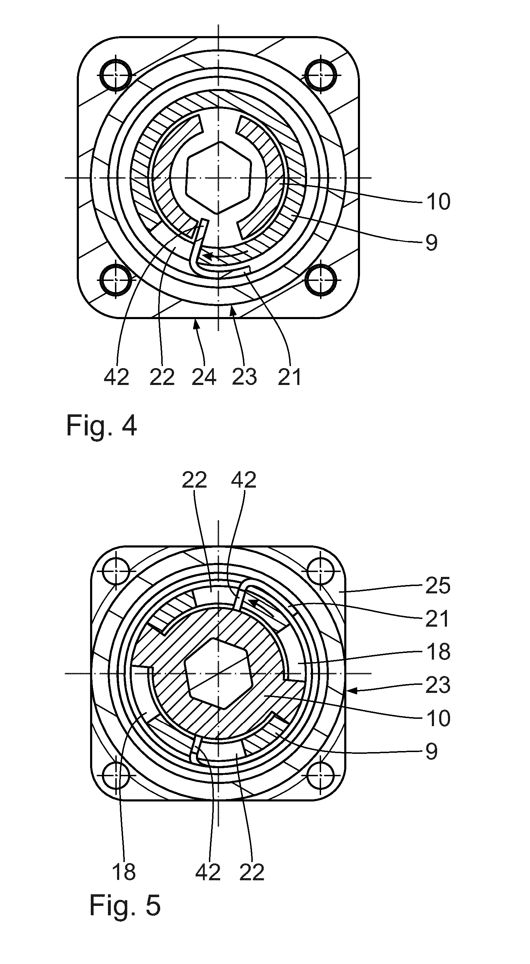

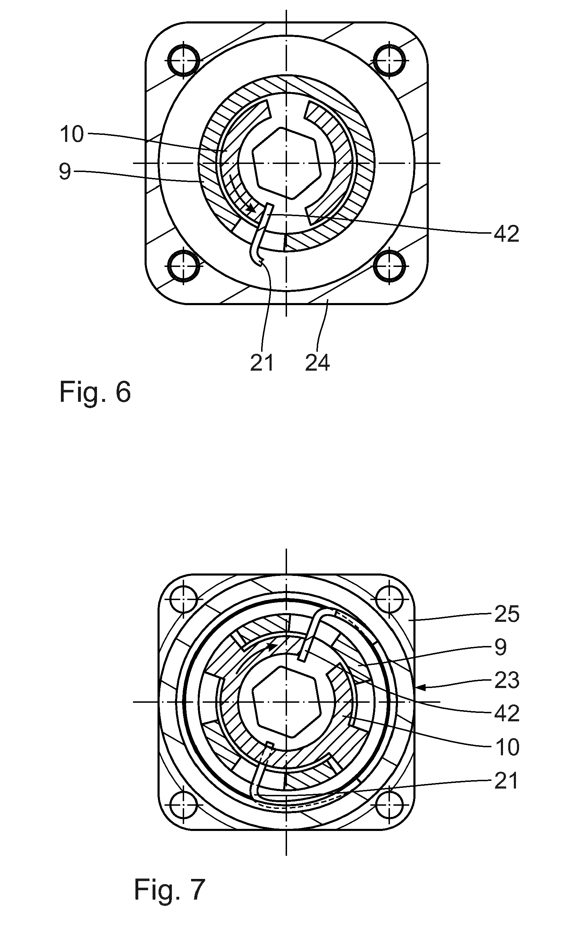

Die Funktionsweise des Rastsperrenelements 8 wird im Folgenden anhand der Fig. 3 bis 7 erläutert. Die Eingreifmittel 42 sind jeweils an einer Stirnseite des von dem Schlingfederelements 21 gebildeten Zylinders angeordnet. Entlang der Antriebsdrehachse 16 sind die Eingreifmittel 42 beabstandet zueinander angeordnet. Die Eingreifmittel 42 sind in voneinander beabstandeten, parallel zueinander ausgerichteten, insbesondere senkrecht zur Antriebsdrehachse 16 orientierten, Funktionsebenen angeordnet. Fig. 4 und Fig. 6 sind in einer der Deckeltrommel 23 zugewandten ersten Funktionsebene gemäß der Schnittlinie IV-IV in Fig. 1 erstellt. Die Fig. 5 und Fig. 7 zeigen einen Querschnitt senkrecht zur Antriebsdrehachse 16 entlang der Schnittlinie V-V in Fig. 1 als zweite Funktionsebene.

Die Eingreifmittel 42 sind derart in den Eingriffschlitzen 22 des Rastsperrenelement-Antriebs 9 angeordnet, dass eine Drehbewegung des Rastsperrenelement-Antriebs 9 im Uhrzeigersinn (Fig. 4) oder im Gegenuhrzeigersinn (Fig. 5) dazu führt, dass das Schlingfederelement 21 gespannt wird. Dadurch wird ein von dem Schlingfederelement 21 in einem unbelasteten Zustand vorgegebener Innendurchmesser reduziert. Das Schlingfederelement 21 wird radial zusammengezogen und eine Drehmomentübertragung von dem Rastsperrenelement-Antrieb 9 auf den Rastsperrenelement-Abtrieb 10 erfolgt - unabhängig von der Drehrichtung des Rastsperrenelement-Antriebs 9 - über die Längsstege 20 in den Längsschlitzen 18.

Sofern das Rastsperrenelement 8 mit einem Drehmoment an dem Rastsperrenelement-Abtrieb 10 beaufschlagt wird, wenn also eine selbsttätige Verlagerung des Gegenstands aus einer vorgegebenen Position erfolgt, bewirkt dies - unabgängig von einer Drehrichtung des Rastsperrenelement-Abtriebs 10 - ein Aufweiten des Schlingfederelements 21. Dazu sind die Eingreifmittel 42 in entsprechenden Ausnehmungen des Rastsperrenelement-Abtriebs 10 angeordnet. Ein Aufweiten des Schlingfederelements 21 bewirkt ein Vergrößern des Durchmessers des von dem Schlingfederelement 21 in einem unbelasteten Zustand gebildeten Zylinders. Das Aufweiten des Schlingfederelements 21 führt dazu, dass es mit einer äußeren Zylindermantelfläche an einer Innenfläche des Zylinderabschnitts 26 der Deckeltrommel 23 anliegt. Dadurch wird eine weitere Drehbewegung des Schlingfederelements 21 und damit des daran anliegenden Rastsperrenelement-Abtriebs 10 verhindert. Dadurch ist gewährleistet, dass - unabhängig von einer Drehrichtung des Rastsperrenelement-Abtriebs 10 - eine selbsttätige, unbeabsichtigte Verlagerung des Gegenstands aus einer vorgegebenen Position verhindert ist.

Ein Gegenstand, der mittels der Vorrichtung 1 in eine bestimmte Position verlagert und positioniert wird, ist sicher gehalten. Das Rastsperrenelement 8 garantiert eine zuverlässige und sichere Anordnung des Gegenstands. Darüber hinaus kann der Gegenstand mittels der Vorrichtung 1 stufenlos, also in jeder beliebigen Zwischenposition, angeordnet werden.

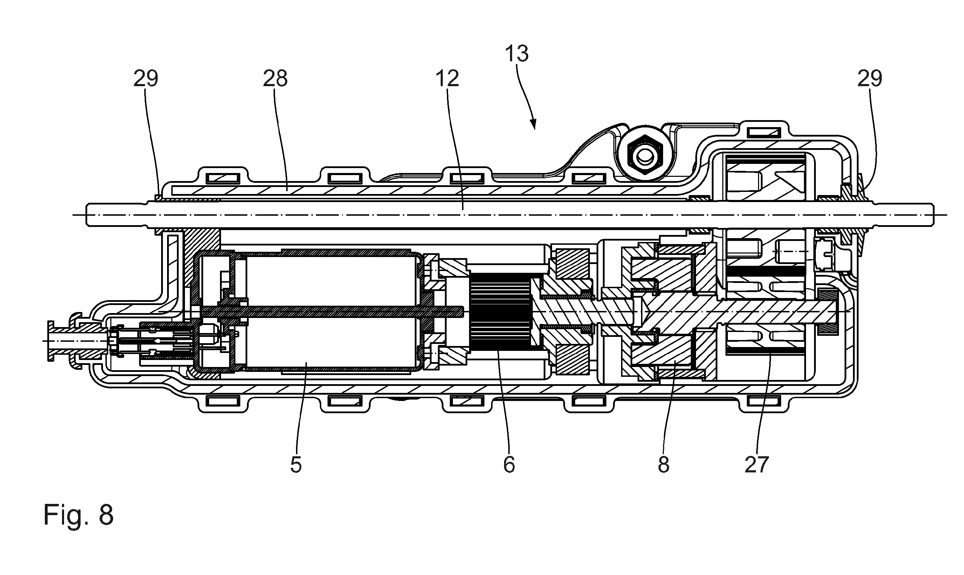

Im Folgenden wird anhand von Fig. 8 eine alternative Ausführung der in Fig. 2 dargestellten Antriebseinheit 13 erläutert. Die Antriebseinheit 13 gemäß Fig. 8 ist im Wesentlichen identisch zu der in Fig. 2 dargestellten Antriebseinheit ausgeführt und umfasst ein als Elektromotor ausgeführtes Antriebselement 5, ein Planetengetriebe 6 und ein Rastsperrenelement 8. Mit dem Rastsperrenelement 8 ist eine Kinematikeinheit in Form einer Stirnradstufe 27 verbunden. Die Stirnradstufe als Kinematikeinheit 27 dient zur Übertragung des Antriebsdrehmoments auf das Übertragungselement 12. Die Antriebseinheit 13 ist in einem gemeinsamen Antriebseinheits-Gehäuse 28 angeordnet. Das Übertragungselement 12 ist aus dem Gehäuse 28 mittels Dichtungen 29 abgedichtet herausgeführt.

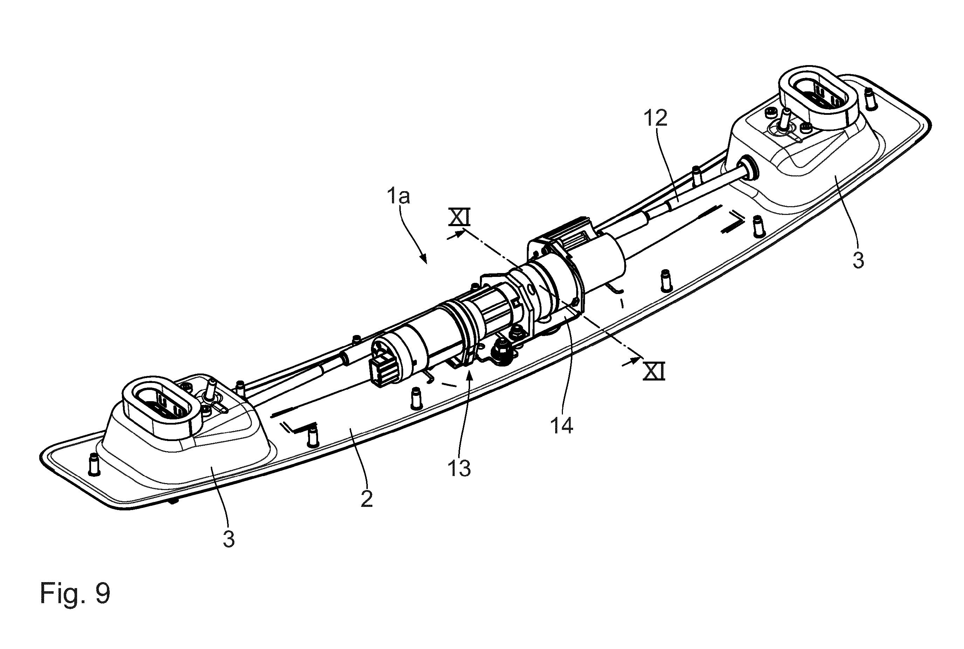

Im Folgenden wird unter Bezugnahme auf die Fig. 9 bis 12 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied gegenüber dem ersten Ausführungsbeispiel besteht in der Ausführung des Rastsperrenelements 8a, das anstelle eines Schlingfederelements Klemmrollen 33 aufweist. Die grundsätzliche Ausführung der Vorrichtung 1a ist in Fig. 9 dargestellt und zeigt eine Ansicht des Trägerelements 2 von unten in einem zusammengebauten Zustand. Die Antriebseinheit 13 ist mittels des Halteblechs 14 an dem Trägerelement 2 befestigt. Mittels des Übertragungselements 12 wird ein Antriebsdrehmoment auf die in den Vertiefungen 3 angeordneten, in Fig. 9 nicht im Einzelnen dargestellten Kinematikelemente übertragen.

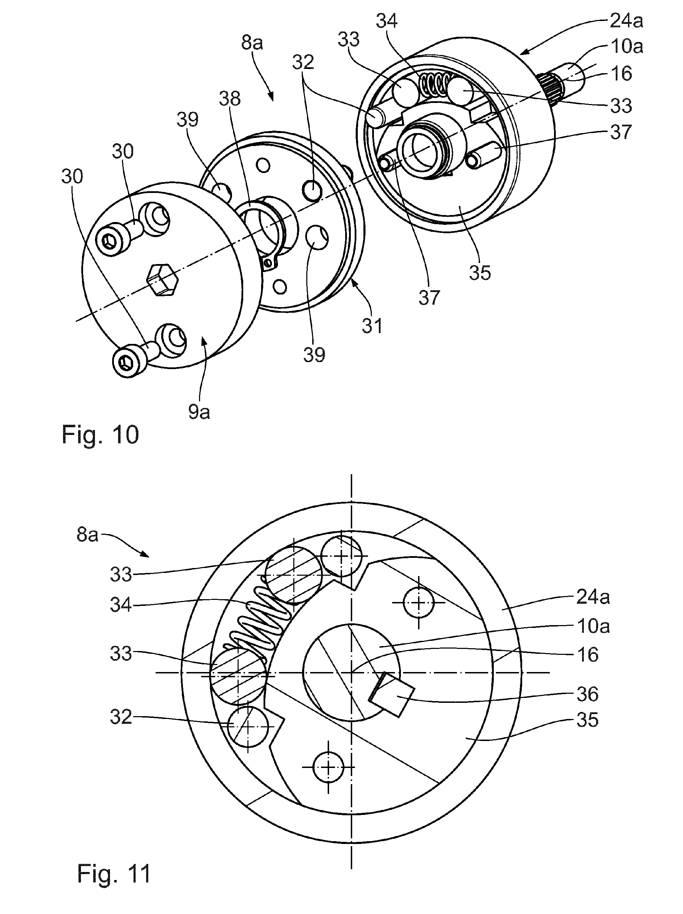

Im Folgenden wird anhand einer Explosionsdarstellung in Fig. 10 der Aufbau des Rastsperrenelements 8a näher erläutert. Das Rastsperrenelement 8a weist eine in Fig. 10 im Vordergrund dargestellte Adapterscheibe 9a auf, die den Rastsperrenelement-Antrieb darstellt. Die Adapterscheibe 9a ist mittels zwei Schrauben 30 mit einer Steuerscheibe 31 sowohl drehfest um die Antriebsdrehachse 16 als auch axial entlang der Antriebsdrehachse 16 verbunden. Es ist möglich, die Steuerscheibe 31 und die Adapterscheibe 9a integral, also einstückig als ein einziges Bauteil auszuführen. An der Steuerscheibe 31 ist ein Auslösestift 32 vorgesehen, der sich parallel zur Antriebsdrehachse 16 erstreckt und an einer der Adapterscheibe 9a abgewandten Stirnfläche der Steuerscheibe 31 angeordnet ist. Das Rastsperrenelement 8a umfasst ein zylindrisches Rastsperrenelement-Gehäuse 24a, in dem zwei Klemmrollen 33 und eine dazwischen angeordnete Druckfeder 34 vorgesehen sind.

Das Rastsperrenelement 8a weist den Rastsperrenelement-Abtrieb 10a in Form einer Abtriebswelle auf. Die Abtriebswelle 10a ist mittels einer Passfeder 36 drehfest mit einer im Rastsperrenelement-Gehäuse 24a angeordneten Klemmnabe 35 bezüglich einer Drehung um die Antriebsdrehachse 16 verbunden. Das Rastsperrenelement-Gehäuse 24a ist insbesondere als feststehendes Gehäuse ausgeführt und umfasst einen gehärteten Stahlring 40, der in einem Kunststoffgehäuse 41 gegen Verdrehen um die Antriebsdrehachse 16 gesichert ist. Die Klemmnabe 35 weist einen bezüglich der Antriebsdrehachse 16 unsymmetrischen, exzentrischen Querschnitt auf. Die Klemmrollen 33 sind derart zwischen der Klemmnabe 35 und dem Rastsperrenelement-Gehäuse 24a geklemmt, dass eine Drehung des Rastsperrenelement-Abtriebs 10a blockiert ist. Dazu werden die beiden Klemmrollen 33 von der dazwischen angeordneten Druckfeder 34 vorgespannt und gegen die Innenwand des Rastsperrenelement-Gehäuses 24a einerseits sowie gegen die Klemmnabe 35 andererseits gedrückt. An der Klemmnabe 35 sind zwei Mitnehmerstifte 37 vorgesehen, die sich ausgehend von der Klemmnabe 35 parallel zur Antriebsdrehachse 16 erstrecken und der Steuerscheibe 31 zugewandt sind. Die Mitnehmerstifte 37 dienen zur Drehmomentübertragung zwischen der Klemmnabe 35 und der Steuerscheibe 31. Eine axiale Sicherung der Steuerscheibe 31 an der Klemmnabe 35 ist durch einen Sicherungsring 38 gewährleistet. Der Sicherungsring 38 ist auf der Abtrittswelle 10a axial befestigt. In dem Gehäuse 24a ist zwischen einer der Klemmrollen 33 und der Klemmnabe 35 ein weiterer Auslösestift 32 vorgesehen.

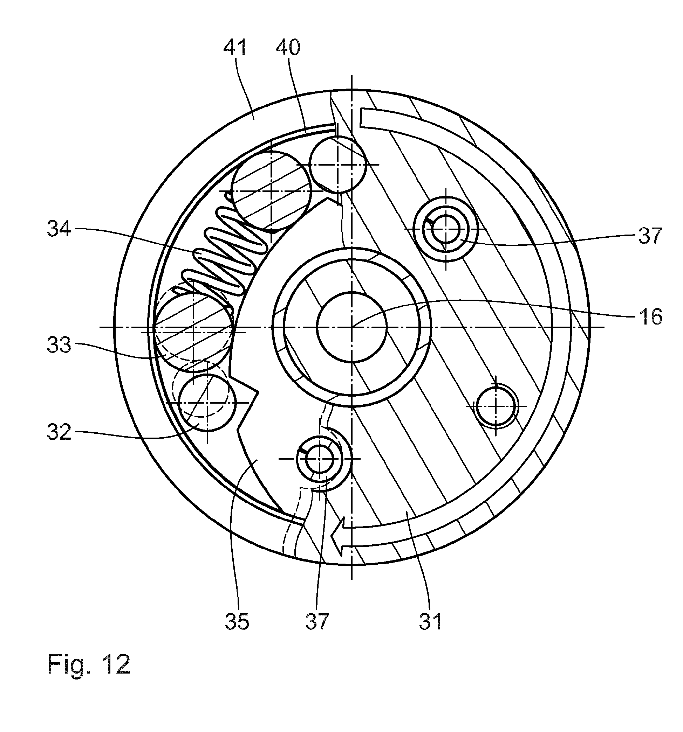

Im Folgenden wird die Funktion des Rastsperrenelements 8a anhand der Fig. 11 und 12 im Einzelnen erläutert. Fig. 11 zeigt das unbetätigte Rastsperrenelement 8a. Die Klemmnabe 35, die mittels der Passfeder 36 drehfest mit dem Rastsperrenelement-Abtrieb 10a drehfest verbunden ist, liegt zumindest teilweise mit einem kreisbogenförmigen Abschnitt an einer Innenwand des Gehäuses 24a an. Zwischen der Klemmnabe 35 und einer freiliegenden Innenwand des Gehäuses 24a sind zwei Klemmrollen 33 angeordnet. Die beiden Klemmrollen 33 sind durch die Druckfeder 34 mit einer Druckkraft beaufschlagt und werden gegen die Innenwand des Gehäuses 24a gedrückt. In der in Fig. 11 gezeigten Anordnung ist das Rastsperrenelement 8a in einer gesperrten Anordnung. Es ist nicht möglich, insbesondere nicht durch eine Drehung des Rastsperrenelement-Abtriebs 10a, eine Drehbewegung auf den Rastsperrenelement-Antrieb 9a zu übertragen.

In Fig. 12 ist das Rastsperrenelement 8a teilgeschnitten dargestellt. Gemäß Fig. 12 erfolgt eine Drehung des Rastsperrenelement-Antriebs 9a entlang des Pfeils im Uhrzeigersinn. Aufgrund der Drehung des Rastsperrenelement-Antriebs 9a wird auch die drehfest damit verbundene Steuerscheibe 31 im Uhrzeigersinn gedreht. Aufgrund der Antriebsdrehbewegung im Uhrzeigersinn bewirkt der in Fig. 12 unten links dargestellte Auslösestift 32 eine Verlagerung der benachbarten Klemmrollen 33 entgegen der Federkraft der Druckfeder 34. Eine entsprechend ausgelöste Anordnung des Auslösestifts 32 und der damit korrespondierenden Klemmrolle 33 ist in Fig. 12 gestrichelt gezeichnet. In der ausgelösten Anordnung ist es möglich, dass die Steuerscheibe 31 gegenüber der Klemmnabe 35 weiter gedreht werden kann. Dabei treffen die Bohrungen 39 in der Steuerscheibe 31 mit einer Innenwand auf eine Außenwand der Mitnehmerstifte 37. Die anliegende Anordnung der Steuerscheibe 31 an dem Mitnehmerstift 37 ist ebenfalls in Fig. 12 gestrichelt dargestellt. In dieser Anordnung, in der die Klemmrolle 33 unverändert gegen die Federkraft der Druckfeder 34 durch den Auslösestift 32 gehalten wird, ist eine direkte Übertragung eines Antriebsdrehmoments von dem Rastsperrenelement-Antrieb 9a über die Steuerscheibe 31 und die Klemmnabe 35 auf den Rastsperrenelement-Abtrieb 10a möglich. Sobald eine Antriebsdrehbewegung des Rastsperrenelement-Antriebs 9a beendet wird, kann die Klemmrolle 33 aufgrund der Federkraft der Druckfeder 34 in eine Klemmposition zurückverlagert werden, so dass eine Drehung um die Antriebsdrehachse 16 gesperrt ist. Das Rastsperrenelement 8a, das Klemmrollen 33 aufweist, ermöglicht ein rastendes Sichern einer Drehbewegung in jeder beliebigen Position und gewährleistet somit ein Anfahren einer beliebigen Position in einem stufenlosen Verfahren. Alle beliebigen Zwischenpositionen können angefahren und mittels des Rastsperrenelements 8a gesichert werden. Insbesondere die Darstellung in Fig. 10 zeigt, dass die Klemmnabe 35 selbst sowie die Anordnung der Klemmrollen 33 und der Auslösestifte 32 zu einer durch die Schrauben 30 festgelegten Vertikalebene symmetrisch angeordnet sind. Dadurch ist klar, dass eine Drehmomentübertragung an dem Rastsperrenelement 8a unabhängig von einer Drehrichtung des Antriebs, insbesondere des Rastsperrenelement-Antriebs 9a, möglich ist.

Die Klemmnabe 35 hat die Funktion einer schiefen Ebene, an der die Klemmrolle 33 an einer Innenwand des Rastsperrelement-Gehäuses 24a geklemmt ist. Durch die Verwendung der Druckfeder 34 ist gewährleistet, dass unmittelbar nach Beendigung einer Antriebsbewegung die Klemmrolle selbsttätig in eine Klemmposition gemäß Fig. 11 zurückverlagert wird.

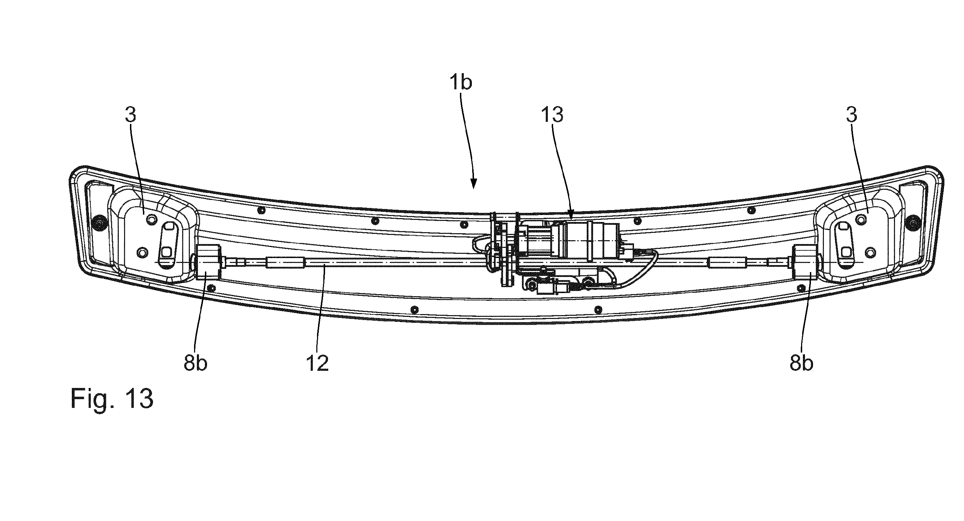

Im Folgenden wird unter Bezugnahme auf Fig. 13 ein drittes Ausführungsbeispiel der Erfindung beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b.

Die Vorrichtung 1b gemäß dem dritten Ausführungsbeispiel entspricht im Wesentlichen dem ersten Ausführungsbeispiel gemäß Fig. 1. Die Vorrichtung umfasst eine Antriebseinheit 13 mit einer Mittelkinematik 11, die die Antriebseinheit 13 mit dem Übertragungselement 12 verbindet. Wesentlicher Unterschied ist, dass die Antriebseinheit 13 kein Rastsperrenelement aufweist. Gemäß der Vorrichtung 1b sind zwei Rastsperrenelemente 8b vorgesehen, die jeweils analog dem ersten Ausführungsbeispiel ein Schlingfederelement aufweisen. Die Rastsperrenelemente 8b sind benachbart zu den Vertiefungen 3 und damit zwischen dem Übertragungselement 12 und einem in der jeweiligen Vertiefung 3 angeordneten, nicht im Einzelnen dargestellten Kinematikelement angeordnet. Dadurch, dass die Rastsperrenelemente 8b direkt benachbart zu dem jeweils korrespondierenden Kinematikelement angeordnet sind, ist verhindert, dass eine unbeabsichtigte Rückverlagerung des Gegenstands von den Kinematikelementen auf das Übertragungselement 12 abgegeben wird. Die Rastsperrenelemente 8b sperren eine derartige, von den Kinematikelementen ausgehende abtriebsseitige Drehmomentübertragung unmittelbar. Das Übertragungselement 12 ist dadurch mechanisch entlastet.

## Patentansprüche

1. Vorrichtung zur Verlagerung eines Gegenstands, wobei die Vorrichtung (1; 1a; 1b) umfasst
a. ein Antriebselement (5) zum Erzeugen einer Antriebsdrehbewegung,
b. ein Übertragungselement (12) zum Übertragen der Antriebsdrehbewegung,
c. mindestens ein mit dem Übertragungselement (12) verbundenes Kinematikelement (4) zum Wandeln der Antriebsdrehbewegung in eine zumindest abschnittweise translatorische Verlagerungsbewegung und
d. ein Rastsperrenelement (8; 8a; 8b) zum rastenden Sichern des Gegenstands in einer Position.

2. Vorrichtung gemäß Anspruch 1, **gekennzeichnet durch** mindestens zwei Kinematikelemente (4), insbesondere genau zwei Kinematikelemente (4).

3. Vorrichtung gemäß einem der vorstehenden Ansprüche, **gekennzeichnet durch** ein Trägerelement (2) zum Tragen Vorrichtung (1; 1a; 1b).

4. Vorrichtung gemäß einem der vorstehenden Ansprüche, **gekennzeichnet durch** ein, insbesondere in eine Antriebseinheit (13) integriertes, Getriebe (6) zum Untersetzen der Antriebsdrehbewegung.

5. Vorrichtung gemäß einem der vorstehenden Ansprüche, **dadurch gekennzeichnet, dass** das Rastsperrenelement (8; 8a; 8b) zwischen dem Antriebselement (5) und dem Übertragungselement (12) angeordnet ist.

6. Vorrichtung gemäß Anspruch 5, **dadurch gekennzeichnet, dass** das Rastsperrenelement (8; 8a; 8b) in eine das Antriebselement (5) umfassende Antriebseinheit (13) integriert ist und insbesondere innerhalb eines Gehäuses (28) der Antriebseinheit (13) angeordnet ist.

7. Vorrichtung gemäß Anspruch 5 oder 6, **gekennzeichnet durch** eine das Rastsperrenelement (8; 8a; 8b) mit dem Übertragungselement (12) verbindende Kinematikeinheit (4)

8. Vorrichtung gemäß Anspruch 7, **gekennzeichnet durch** ein Stirnradstufengetriebe (27) als Kinematikeinheit.

9. Vorrichtung gemäß Anspruch 7, **gekennzeichnet durch** eine Mittelkinematik (11) als Kinematikeinheit.

10. Vorrichtung gemäß einem der Ansprüche 1 bis 4, **dadurch gekennzeichnet, dass** das Rastsperrenelement (8; 8a; 8b) zwischen dem Übertragungselement (12) und dem mindestens einen Kinematikelement (4) angeordnet ist.

11. Vorrichtung gemäß einem der vorstehenden Ansprüche, **dadurch gekennzeichnet, dass** das Rastsperrenelement (8; 8a; 8b) ein Schlingfederelement (21) aufweist.

12. Vorrichtung gemäß einem der Ansprüche 1 bis 10, **dadurch gekennzeichnet, dass** das Rastsperrenelement (8; 8a; 8b) Klemmrollen (33) aufweist.

13. Vorrichtung gemäß einem der vorstehenden Ansprüche, **dadurch gekennzeichnet, dass** die Vorrichtung (1; 1a; 1b) an einem Kraftfahrzeug, insbesondere an einem Automobil, anbringbar ist.

14. Vorrichtung gemäß einem der vorstehenden Ansprüche, **dadurch gekennzeichnet, dass** der Gegenstand ein an der Vorrichtung (1; 1a; 1b) befestigtes Luftleitelement, insbesondere ein Spoilerelement und insbesondere ein Heckspoiler für ein Kraftfahrzeug, ist.

15. Kraftfahrzeug umfassend eine Vorrichtung (1; 1a; 1b) gemäß einem der vorstehenden Ansprüche.
